# EUROPÄISCHE PATENTANMELDUNG

(11) **EP 4 431 790 A1**
(43) Veröffentlichungstag der Anmeldung: **18.09.2024**
(21) Anmeldenummer: 23162587.2
(22) Anmeldetag: 17.03.2023
(51) Int. Cl.: F17C 5/06

(54) **VERFAHREN UND ANLAGE ZUM BETANKEN EINES WASSERSTOFFTANKS**

(71) Anmelder: Maximator Gmbh, 99734 Nordhausen (DE)
(72) Erfinder: ADLER, Michael, 2433 Margarethen am Moos (AT); NAGL, Christoph, 1030 Wien (AT); ADLER, Robert, 1030 Wien (AT); RASCH, Markus, 1030 Wien (AT); STEPHAN, Markus, 1030 Wien (AT)
(74) Vertreter: SONN Patentanwälte GmbH & Co KG

(57) **Zusammenfassung**

Verfahren zum Betanken eines Wasserstofftanks (2A), insbesondere eines Fahrzeuges (2), mit einem Gas, insbesondere Wasserstoff, mit den Schritten:
Befüllen eines ersten Wasserstoffspeichers (4) mit dem Gas,
Befüllen eines Arbeitsfluidspeichers (7) mit einem Arbeitsfluid,
Verbinden des ersten Wasserstoffspeichers (4) mit dem Wasserstofftank (4), so dass Gas vom ersten Wasserstoffspeicher (4) in den Wasserstofftank (2A) überführt wird, und
Verbinden des Arbeitsfluidspeichers (7) mit dem ersten Wasserstoffspeicher (4), so dass Arbeitsfluid (8) vom Arbeitsfluidspeicher (7) in den ersten Wasserstoffspeicher (4) überführt wird,
Abkühlen des Gases im ersten Wasserstoffspeicher (4) durch isentrope Entspannung vor dem Überführen des Arbeitsfluids (8) vom Arbeitsfluidspeicher (7) in den ersten Wasserstoffspeicher (4), so dass durch die isentrope Entspannung abgekühltes Gas vom ersten Wasserstoffspeicher (4) in den Wasserstofftank (2A) überführt wird.

## Beschreibung

Die Erfindung betrifft ein Verfahren zum Betanken eines Wasserstofftanks, insbesondere eines Fahrzeuges, mit Wasserstoff, mit den Schritten:
Vorsehen eines ersten Wasserstoffspeichers mit einem mit Wasserstoff befüllten Wasserstoffvolumen,
Vorsehen eines Arbeitsfluidspeichers mit einem Arbeitsfluid,
Verbinden des ersten Wasserstoffspeichers mit dem Wasserstofftank, so dass Wasserstoff in einer ersten Ausströmphase vom ersten Wasserstoffspeicher in den Wasserstofftank überführt wird, und
Verbinden des Arbeitsfluidspeichers mit dem ersten Wasserstoffspeicher, so dass Arbeitsfluid in einer mit der ersten Ausströmphase zeitlich überlappenden ersten Nachverdichtungsphase vom Arbeitsfluidspeicher in den ersten Wasserstoffspeicher überführt wird, wodurch das mit Wasserstoff befüllte Wasserstoffvolumen in dem ersten Wasserstoffspeicher reduziert und ein mit Arbeitsfluid befüllte Arbeitsfluidvolumen in dem ersten Wasserstoffspeicher vergrößert wird.

Weiters betrifft die Erfindung eine Betankungsanlage, insbesondere eine mobile Betankungsanlage, zum Betanken eines Wasserstofftanks, insbesondere eines Fahrzeuges, mit Wasserstoff, aufweisend:
einen ersten Wasserstoffspeicher, welcher den Wasserstoff enthält,
einen Arbeitsfluidspeicher, welcher ein Arbeitsfluid enthält,
eine Steuereinrichtung, insbesondere mit einer Ventilsteuerung, zur Steuerung einer ersten Ausspeicherverbindung zum Ausspeichern von Wasserstoff vom ersten Wasserstoffspeicher zum Wasserstofftank und zur Steuerung einer ersten Zulaufverbindung zwischen dem Arbeitsfluidspeicher und dem ersten Wasserstoffspeicher,
eine Pumpe, mit welcher Arbeitsfluid vom Arbeitsfluidspeicher zum ersten Wasserstoffspeicher gepumpt wird.

Schließlich betrifft die Erfindung ein Tankfahrzeug mit einer solchen, vorzugsweise mobilen, d.h. nicht ortsgebundenen, Betankungsanlage.

In der DE 10 2015 016327 A1 wird eine Tankstelle zur Befüllung von Speicherbehältern in mobilen Fahrzeugen mit einem Gas, insbesondere mit Wasserstoff, beschrieben. Der Wasserstoff wird in einem oder mehreren Konstantdruckspeichern gelagert, mit welchen das Gas bei einem bestimmten, konstanten Druck zur Verfügung gestellt wird. Dafür weist der Konstantdruckspeicher einen Zylinder auf, welcher durch einen beweglichen Trennkolben in zwei Bereiche aufgeteilt ist. Der erste Bereich nimmt den Wasserstoff auf. Der zweite Bereich nimmt eine Flüssigkeit, beispielsweise eine Hydraulikflüssigkeit auf. Während der Einspeicherphase wird der Druck des Wasserstoffs im ersten Bereich durch Verschieben des Trennkolben konstant gehalten, wobei der erste Bereich vergrößert und der zweite Bereich verkleinert wird. Während der Ausspeicherphase wird das Volumen des ersten Bereiches verkleinert, indem mehr Flüssigkeit in den zweiten Bereich gefördert wird und das Volumen des zweiten Bereiches so vergrößert wird, so dass wiederum der Druck im ersten Bereich konstant gehalten wird. Mit dieser Ausführung soll die Anzahl von Lastwechseln reduziert und dadurch die Lebensdauer der Tankstelle erhöht werden. Nachteilig an diesem Stand der Technik ist jedoch, dass eine aufwendige Gaskonditioniereinheit erforderlich ist, mit welcher das Gas vom Konstantdruckspeicher für den Abnehmer vorbereitet wird. In der Praxis hat sich insbesondere gezeigt, dass die Temperatur des Gases vom Konstantdruckspeicher mit einer Kältemaschine gesenkt werden musste, um die erlaubte Höchsttemperatur des Fahrzeugtanks nicht zu überschreiten.

Die Aufgabe der vorliegenden Erfindung besteht darin, zumindest einzelne Nachteile des Standes der Technik zu lindern bzw. zu beheben. Die Erfindung setzt sich bevorzugt zum Ziel, ein Verfahren zum Betanken eines Wasserstofftanks zu schaffen, mit welchem einer Überhitzung des Wasserstofftanks mit möglichst geringem apparativen Aufwand vorgebeugt wird.

Diese Aufgabe wird durch ein Verfahren nach Anspruch 1, eine Betankungsanlage nach Anspruch 12 und ein Betankungsfahrzeug nach Anspruch 15 gelöst. Bevorzugte Ausführungsformen sind in den abhängigen Ansprüchen angegeben.

Erfindungsgemäß weist das Verfahren folgenden Schritt auf:
Abkühlen des Wasserstoffs im ersten Wasserstoffspeicher durch isentrope Entspannung vor der Nachverdichtungsphase und/oder während der Nachverdichtungsphase, so dass durch die isentrope Entspannung abgekühlter Wasserstoff vom ersten Wasserstoffspeicher in den Wasserstofftank überführt wird.

Wenn der erste Wasserstoffspeicher mit dem Wasserstofftank verbunden wird, insbesondere durch Öffnen eines ersten Gasausgangventils, strömt Wasserstoff aufgrund der Druckdifferenz zwischen dem ersten Wasserstoffspeicher und dem Wasserstofftank vom ersten Wasserstoffspeicher in den Wasserstofftank ab. Dabei findet ein (teilweiser) Druckausgleich zwischen dem ersten Wasserstoffspeicher und dem Wasserstofftank statt. Durch das Nachführen der vom Wasserstoff verschiedenen, Arbeitsflüssigkeit, hier als Arbeitsfluid bezeichnet, vom Arbeitsfluidspeicher in den ersten Wasserstoffspeicher über die Dauer der Nachverdichtungsphase wird der Wasserstoff im ersten Wasserstoffspeicher nachverdichtet. Dadurch wird der Massenstrom des Wasserstoffs vom ersten Wasserstoffspeicher in den Wasserstofftank gegenüber einem freien Überströmen des Wasserstoffs ausschließlich durch die Druckdifferenz zwischen dem ersten Wasserstoffspeicher und dem Wasserstofftank erhöht. Anders als beim Stand der Technik wird der erste Wasserstoffspeicher jedoch nicht als Konstantdruckspeicher betrieben, sondern der Gasdruck des Wasserstoffs im ersten Wasserstoffspeicher wird vor der Nachverdichtungsphase und/oder während der Nachverdichtungsphase, vorzugsweise über die gesamte Dauer der Nachverdichtungsphase, reduziert. Der Wasserstofftank heizt sich durch die Druckerhöhung beim Betanken mit dem Wasserstoff auf. Beim Stand der Technik mit der Betankung über Konstantdruckspeicher war es nur durch besondere Maßnahmen, insbesondere eine Kältemaschine, möglich, die Maximaltemperatur des Fahrzeugtankes, welche zwischen 80°C und 115°C betragen kann, nicht zu überschreiten. Demgegenüber wird beim erfindungsgemäßen Verfahren durch die zumindest teilweise isentrope Entspannung des Wasserstoffs im ersten Wasserstoffspeicher eine Abkühlung des Wasserstoffs im ersten Wasserstoffspeicher hervorgerufen. Das führt dazu, dass nach Beginn der Betankung zunehmend durch die isentrope Entspannung gekühlter Wasserstoff vom ersten Wasserstoffspeicher in den Wasserstofftank überführt wird. Das hat den vorteilhaften Effekt, dass die Tanktemperatur über den Betankungszyklus gesehen weniger stark ansteigt. Die Erfindung macht sich daher die isentrope Entspannung des Wasserstoffs im ersten Wasserstoffspeicher zunutze, um die Höchsttemperatur des Fahrzeugtankes am Ende der Betankung einhalten zu können.

Bei einer ersten Ausführungsform wird die Verbindung des Arbeitsfluidspeichers mit dem ersten Wasserstoffspeicher im Wesentlichen gleichzeitig mit der Verbindung des ersten Wasserstoffspeichers mit dem Wasserstofftank im Wesentlichen geöffnet. Bei dieser Ausführungsform beginnt die erste Nachverdichtungsphase im Wesentlichen gleichzeitig mit der ersten Ausströmphase, in welcher der Wasserstoff vom ersten Wasserstoffspeicher in den Wasserstofftank strömt. Die volumetrische Förderleistung der Pumpe ist jedoch nicht ausreichend, um den Druck im ersten Wasserstoffspeicher aufrecht zu erhalten, so dass teilweise isentrop entspannter Wasserstoff während der Nachverdichtungsphase vom ersten Wasserstoffspeicher in den Wasserstofftank überführt wird. Die erste Nachverdichtungsphase kann vor, gleichzeitig oder nach dem Ende der ersten Ausströmphase (d.h. vor, gleichzeitig mit oder nach dem Schließen der Verbindung zwischen dem ersten Wasserstoffspeicher und dem Wasserstofftank) enden.

Bei einer besonders bevorzugten Ausführungsform beginnt die erste Ausströmphase vor der ersten Nachverdichtungsphase, d.h. die Verbindung zwischen dem Arbeitsfluidspeicher und dem ersten Wasserstoffspeicher wird erst nach Ablauf einer Wartezeit ab Beginn der ersten Ausströmphase geöffnet. Somit setzt das Abkühlen des Wasserstoffs im ersten Wasserstoffspeicher durch isentrope Entspannung vor dem Überführen des Arbeitsfluids vom Arbeitsfluidspeicher in den ersten Wasserstoffspeicher an.

Durch das Einhalten der Wartezeit vor dem Öffnen einer ersten Zulaufverbindung zum Arbeitsfluidspeicher können verschiedene Effekte erzielt werden.

Bereits eine Wartezeit von zumindest 5 Sekunden (s), insbesondere von zumindest 10 Sekunden, beispielsweise von zumindest 20 Sekunden, lindert oder behebt das Problem, dass die erste Ausspeicherverbindung, beispielsweise eine Rohrleitung, zwischen dem ersten Wasserstoffspeicher und dem Wasserstofftank eine thermische Kapazität besitzt und zunächst abgekühlt werden muss, was durch den ausströmenden Wasserstoff bewirkt wird. Zur Maximierung des Effekts des Druckverhältnisses zwischen dem ersten Wasserstoffspeicher und dem Wasserstofftank ist es vorteilhaft, die erste Nachverdichtungsphase erst zu beginnen (d.h. die Pumpe zu starten und durch die Verdrängung des Wasserstoffs im ersten Wasserstoffspeicher mit Arbeitsfluid den Druckabfall zu reduzieren und dabei die absolute Temperaturdifferenz zwischen dem Wasserstoff im ersten Wasserstoffspeicher und dem Wasserstoff im Wasserstofftank zu verringern), wenn die erste Ausspeicherverbindung vorgekühlt wurde.

Mit einer längeren Wartezeit von zumindest 30 Sekunden, insbesondere von zumindest 60 Sekunden, kann hingegen der Abkühleffekt durch die Druckdifferenz zwischen erstem Wasserstoffspeicher und Wasserstofftank noch stärker genutzt werden.

Bei diesen Ausführungsformen wird der Wasserstoff im ersten Wasserstoffspeicher bereits vor Beginn der ersten Nachverdichtungsphase aufgrund der isentropen Entspannung gekühlt, so dass gekühlter Wasserstoff vom ersten Wasserstoffspeicher in den Wasserstofftank nachströmt. Dieser Kühleffekt wirkt der Aufheizung durch die Druckerhöhung im Wasserstofftank entgegen. Nach Ablauf der Wartezeit wird das Arbeitsfluid in den als Druckspeicher ausgebildeten ersten Wasserstoffspeicher gefördert, wodurch das für den Wasserstoff im ersten Wasserstoffspeicher zur Verfügung stehende Wasserstoffvolumen verringert wird. Dabei reicht die volumetrische Förderleistung der (Hochdruck-)Pumpe nicht aus, um den Druck im ersten Wasserstoffspeicher aufrecht zu erhalten. Bei einer bevorzugten Ausführungsform wird die erste Ausspeicherverbindung, vorzugsweise bei weiter nachströmendem Arbeitsfluid, in den ersten Wasserstoffspeicher geschlossen, sobald der Fahrzeugtank und der erste Wasserstoffspeicher ihre Drücke auf eine Druckdifferenz bevorzugt ausgewählt aus einem Bereich von 20 bar bis 200 bar, vorzugsweise 30 bar bis 100 bar, insbesondere von 40 bar bis 70 bar, angeglichen haben, so dass die erste Ausströmphase vom ersten Wasserstoffspeicher beendet wird.

Das Nachführen des gekühlten Gases wirkt der Temperaturerhöhung des Wasserstofftanks entgegen, welche sich aus der Druckerhöhung beim Betanken mit dem Gas ergibt. Vorteilhafterweise kann so die Endtemperatur des Wasserstofftanks bei Abschluss des Tankvorgangs gesenkt werden. Besonders günstig ist es, wenn die Endtemperatur des Wasserstofftanks unter einer vorgegebenen Höchsttemperatur gehalten werden kann, ohne das von dem ersten Wasserstoffspeicher (bzw. von dem weiter unten beschriebenen zweiten bzw. dritten Wasserstoffspeicher) ausströmende Gas zusätzlich kühlen zu müssen. Dadurch kann insbesondere eine Kältemaschine zwischen dem ersten Wasserstoffspeicher und dem Wasserstofftank entfallen. Somit ist bevorzugt keine Kältemaschine zwischen dem ersten Wasserstoffspeicher und dem Wasserstofftank (und gegebenenfalls auch keine Kältemaschine zwischen dem zweiten Wasserstoffspeicher und dem Wasserstofftank bzw. zwischen dem dritten Wasserstoffspeicher und dem Wasserstofftank, siehe unten) geschalten.

Für die Zwecke dieser Offenbarung bezieht sich "Wasserstoff" stets auf den molekularen Wasserstoff (H2).

Mit dem erfindungsgemäßen Verfahren kann insbesondere der Wasserstofftank eines Fahrzeugs mit einer Brennstoffzelle, beispielsweise eines Baufahrzeugs wie eines Baggers, mit Wasserstoff betankt werden.

Beim Öffnen der ersten Zulaufverbindung zum Arbeitsfluidspeicher nach Ablauf der Wartezeit kann das im ersten Wasserstoffspeicher verbliebene Gas eine Temperatur von weniger als minus 20 Grad Celsius (°C), insbesondere weniger als minus 30 Grad Celsius, beispielsweise weniger als minus 35 °C, aufweisen.

Bevorzugt beträgt der Anfangs- bzw. Initialdruck des Wasserstoffs im ersten Wasserstoffspeicher, d.h. der Nenndruck des Wasserstoffs vor dem Öffnen der ersten Ausspeicherverbindung zum Wasserstofftank, mehr als 500 bar, vorzugsweise mehr als 600 bar, insbesondere mehr als 700 bar und/oder weniger als 875 bar, beispielsweise im Wesentlichen 800 bar. Dasselbe gilt bevorzugt auch für den weiter unten beschriebenen zweiten bzw. dritten Wasserstoffspeicher.

In der Praxis findet eine polytrope Entspannung des Wasserstoffs in dem ersten Wasserstoffspeicher (und natürlich auch in dem weiter unten beschriebenen zweiten bzw. dritten Wasserstoffspeicher) statt. Wenn in dieser Beschreibung von der isentropen Entspannung die Rede ist, soll der isentrope Anteil der polytropen Entspannung aufgrund des Öffnens der ersten Ausspeicherverbindung vom ersten (bis n-ten) Wasserstoffspeicher zum Wasserstofftank verstanden werden.

Bei einer bevorzugten Ausführungsform wird das Gas bei geöffneter erster Ausspeicherverbindung allein aufgrund der Druckdifferenz zwischen erstem Wasserstoffspeicher und Wasserstofftank, d.h. passiv, ohne zusätzlichen Verdichter, vom ersten Druckspeicher zum Wasserstofftank gefördert.

Bei der erfindungsgemäßen Betankungsanlage ist die Steuereinrichtung dazu eingerichtet, die erste Zulaufverbindung und/oder die Pumpe derart zu steuern, dass Wasserstoff im ersten Wasserstoffspeicher durch isentrope Entspannung gekühlt und durch die isentrope Entspannung abgekühlter Wasserstoff vom ersten Wasserstoffspeicher über die erste Ausspeicherverbindung in den Wasserstofftank abgeführt wird.

Bei einer bevorzugten Ausführungsform ist die Steuereinrichtung dazu eingerichtet, die erste Zulaufverbindung nach Ablauf einer Wartezeit ab der Verbindung des ersten Wasserstoffspeichers mit dem Wasserstofftank zu öffnen.

Um dem Gas im ersten Druckspeicher genügend Zeit für die isentrope Entspannung zu geben, wird bei einer bevorzugten Ausführungsform mit der Steuereinrichtung eine Wartezeit von mindestens 5 Sekunden, insbesondere mindestens 10 Sekunden, vorzugsweise mindestens 15 Sekunden, vom Zeitpunkt des Verbindens des ersten Wasserstoffspeichers mit dem Wasserstofftank bis zum Zeitpunkt des Verbindens des Arbeitsfluidspeichers mit dem ersten Wasserstoffspeicher eingehalten. Mit dieser Ausführung kann die erste Ausspeicherverbindung unter Ausnutzung der maximalen Druckdifferenz zwischen dem ersten Wasserstoffspeicher und dem Wasserstofftank abgekühlt werden.

Um zu erreichen, dass Wasserstoff im stärker isentrop gekühlten Zustand vom ersten Wasserstoffspeicher in den Wasserstofftank ausgespeichert wird, kann die Wartezeit zumindest 30 Sekunden, insbesondere zumindest 60 Sekunden betragen.

Je nach Ausführung kann die Wartezeit weniger als 15 Minuten, insbesondere weniger als 10 Minuten, vorzugsweise weniger als 5 Minuten, betragen.

Bei einer bevorzugten Ausführungsform steht das Arbeitsfluid im ersten Wasserstoffspeicher im direkten Kontakt mit dem Wasserstoff. Das Arbeitsfluid ist daher als Flüssigkolben ausgebildet. Somit bildet das Arbeitsfluid im Inneren des ersten Wasserstoffspeichers ein Flüssigkeitsvolumen, insbesondere eine Flüssigkeitssäule, welches direkt, d.h. ohne dazwischenliegende Maschinenbauteile, insbesondere ohne Festkörper-Kolben, an den Wasserstoff grenzt. Durch Nachfördern von Arbeitsfluid in den ersten Wasserstoffspeicher wird das vom Arbeitsfluid im Inneren des ersten Wasserstoffspeichers eingenommene Arbeitsfluidvolumen erhöht und das vom Wasserstoff eingenommene Wasserstoffvolumen reduziert, womit eine entsprechende Erhöhung des Wasserstoffdrucks einhergeht.

Als Arbeitsfluid wird bevorzugt ein Polyalphaolefin verwendet.

Die Verwendung eines Polyalphaolefins (PAO) als Arbeitsfluid ist überraschend, da besondere Vorteile erzielt werden, ohne die für PAO typischen Nachteile in Kauf nehmen zu müssen.

Bei praktischen Versuchen hat sich herausgestellt, dass ein besonderer Vorteil des PAO für die erfindungsgemäße Anwendung seine Dünnflüssigkeit, d.h. seine niedrige Viskosität, ist. Damit kann beispielsweise das Problem vermieden werden, dass durch Druckwechsel in das Fluid eingelöste Gase beim Wiederentspannen zum Aufschäumen des Fluids führen. Ein solches Aufschäumen könnte etwa in einer das Arbeitsfluid nachführenden Pumpe die Kavitationsneigung erhöhen, wodurch der Verschleiß der Pumpe erhöht würde. Bei der Betankung des Fahrzeugs mit Wasserstoff könnte das Aufschäumen des Arbeitsfluids weiters Fluidverschleppungen in den Wasserstofftank bewirken, welche jedoch vermieden werden sollen. Beim Stand der Technik wurden hochviskose Arbeitsfluide, beispielsweise ionische Flüssigkeiten, vorgeschlagen, welche eine hohe Schaumneigung haben, die durch eine sehr geringe Gaslöslichkeit kompensiert werden sollte. Tatsächlich wurde die erforderliche geringe Gaslöslichkeit in der Praxis jedoch nicht erreicht. Andere Arbeitsfluide wie Mineralöle, synthetische Öle und Hydrauliköle sind so viskos, dass die Schaumbildung einen Einsatz bei den erfindungsgemäßen Anwendungen sehr nachteilig bzw. unmöglich machen würde. Andererseits sind Thermoöle wegen ihrer Neigung zu Verschleppungen für einen Einsatz bei Anlagen, die Wasserstoff für Fahrzeuge mit Brennstoffzellenantrieb zur Verfügung stellen, untauglich. Der erfindungsgemäße Einsatz des PAO beruht auf der Erkenntnis, dass mit der geringen Schaumneigung des PAO eine Schaumbildung zuverlässig vermieden werden kann, ohne eine extrem niedrige Gaslöslichkeit vorauszusetzen. Bei den erfindungsgemäßen Anwendungen kann die geringe Schaumbildung des PAO optimal genutzt werden, auch wenn die Gaslöslichkeit des PAO zwar absolut gesehen recht niedrig, aber höher als bei den ionischen Flüssigkeiten ist.

Unter einem "Polyalphaolefin" wird ein Poly-1-Olefin verstanden, welches durch Polymerisation von Alphaolefinen hergestellt wurde. Der Begriff "Polyalphaoefin" umfasst Polyalphaolefin-Homopolymere, aus zwei oder mehr verschiedenen Monomereinheiten zusammengesetzte Polymere (z.B. Polyalphaolefin-Copolymere, Polyalphaolefin-Terpolymere), sowie Mischungen davon.

Bevorzugt weist das Arbeitsfluid das Polyalphaolefin in einer Menge von 80 Gew% oder mehr auf, bevorzugter 90 Gew% oder mehr, noch bevorzugter 95 Gew% oder mehr, besonders bevorzugt 99 Gew% oder mehr, bezogen auf das Gesamtgewicht des Arbeitsfluids. Dadurch können die positiven Eigenschaften des Polyalphaolefins hinsichtlich geringer Gaslöslichkeit und geringer Schaumneigung effektiv genutzt werden.

Je nach Ausführung kann das Arbeitsfluid genau ein Polyalphaolefin aufweisen. Bei einer bevorzugten Ausführungsform weist das Arbeitsfluid eine Mischung aus zwei oder mehreren Polyalphaolefinen auf. Die physikalischen Eigenschaften des Arbeitsfluids (z.B. Viskosität, Siedepunkt) können dann an die jeweiligen Gegebenheiten angepasst werden.

Das Polyalphaolefin kann eine unverzweigte oder eine verzweigte Kettenstruktur aufweisen (n-Alkan oder iso-Alkan). Auch eine Mischung aus einem unverzweigten Polyalphaolefin und einem Isomer desselben Polyalphaolefins oder eines Polyalphaolefins mit einer abweichenden Anzahl an Kohlenstoffatomen kann verwendet werden. Dadurch kann der Siedepunkt des Arbeitsfluids angepasst werden.

Bei einer bevorzugten Ausführungsform weisen zumindest 90 Gew% des Polyalphaolefins 19 oder weniger Kohlenstoffatome pro Molekül auf, bevorzugt 14 bis 18 Kohlenstoffatome pro Molekül, besonders bevorzugt 16 bis 18 Kohlenstoffatome pro Molekül, bezogen auf das Gesamtgewicht des Polyalphaolefins. Bevorzugt weisen zumindest 95 Gew% des Polyalphaolefins eine solche Anzahl von Kohlenstoffatomen auf, noch bevorzugter zumindest 99 Gew%, bezogen auf das Gesamtgewicht des Polyalphaolefins. Polyalphaolefine mit einer solchen Anzahl von Kohlenstoffatomen weisen eine besonders geringe Gaslöslichkeit und eine besonders geringe Schaumneigung auf, sodass sie sich gut als Arbeitsfluid eignen. Weist das Arbeitsfluid zwei oder mehr Polyalphaolefine auf, weisen vorzugsweise alle Polyalphaolefine eine solche Anzahl von Kohlenstoffatomen auf.

Vorzugsweise weisen maximal 10 Gew% des Polyalphaolefins 20 oder mehr Kohlenstoffatome auf, insbesondere 20 bis 30 Kohlenstoffatome, bezogen auf das Gesamtgewicht des Polyalphaolefins. Bevorzugt weisen maximal 5 Gew% des Polyalphaolefins eine solche Anzahl von Kohlenstoffatomen auf, noch bevorzugter maximal 3 Gew%, bezogen auf das Gesamtgewicht des Polyalphaolefins. Dadurch kann die Viskosität geringgehalten werden, was mit einer geringen Schaumneigung einhergeht.

Das Arbeitsfluid weist vorzugsweise einen Anteil eines aromatischen Kohlenwasserstoffs von maximal 1 Gew% auf, bevorzugt maximal 0,5 Gew%, bezogen auf das Gesamtgewicht des Arbeitsfluids. Auch hierdurch kann die Viskosität und folglich die Schaumneigung geringgehalten werden.

Ein Anteil einer Schwefelverbindung im Arbeitsfluid liegt vorzugsweise bei maximal 10.000 ppm, bevorzugter bei maximal 1.000 ppm, bezogen auf das Gesamtgewicht des Arbeitsfluids. Dadurch kann insbesondere eine Wirkung als Zellgift bei Fahrzeugen mit Brennstoffzellenantrieb vermieden werden.

Bei einer bevorzugten Ausführungsform liegt der Wasserstoff im ersten Wasserstoffspeicher vor dem Verbinden mit dem Wasserstofftank bei einem Nenndruck, auch als Initialdruck bezeichnet, vor. Der Nenndruck beträgt bevorzugt mehr als 500 bar, vorzugsweise mehr als 600 bar, insbesondere mehr als 700 bar, und/oder weniger als 875 bar, beispielsweise im Wesentlichen 800 bar. Zum Abschluss des Betankungsverfahrens kann der Wasserstoff durch das Verbinden des ersten (und/oder des unten beschriebenen zweiten bzw. dritten) Wasserstoffspeichers mit dem Arbeitsfluidspeicher im Wesentlichen wieder auf den Nenndruck verdichtet werden.

Zur Erreichung hoher Fülldrücke im Wasserstofftank durch sequentielle Betankung des Wasserstofftanks über mehrere Wasserstoffspeicher weist das Verfahren bei einer bevorzugten Ausführungsform zudem die folgenden Schritte auf:
Vorsehen eines zweiten Wasserstoffspeichers mit einem mit Wasserstoff befüllten zweiten Wasserstoffvolumen,
Verbinden des zweiten Wasserstoffspeichers mit dem Wasserstofftank, vorzugsweise bei geschlossener erster Ausspeicherverbindung, so dass Wasserstoff in einer zweiten Ausströmphase vom zweiten Wasserstoffspeicher in den Wasserstofftank überführt wird,
Nachführen von Arbeitsfluid in den zweiten Wasserstoffspeicher in einer zweiten Nachverdichtungsphase, vorzugsweise durch Verbinden des zweiten Wasserstoffspeichers mit dem ersten Wasserstoffspeicher und Überführen von Arbeitsfluid vom ersten Wasserstoffspeicher in den zweiten Wasserstoffspeicher, so dass der Wasserstoff im zweiten Wasserstoffspeicher durch isentrope Entspannung vor der zweiten Nachverdichtungsphase und/oder während der zweiten Nachverdichtungsphase abgekühlt wird und durch die isentrope Entspannung abgekühlter Wasserstoff vom zweiten Wasserstoffspeicher in den Wasserstofftank überführt wird.

Die Verbindung zwischen dem zweiten Wasserstoffspeicher und dem Wasserstofftank wird bevorzugt 1 bis 20, insbesondere 2 bis 10, beispielsweise im Wesentlichen vier, Minuten, nach dem Verbinden des ersten Wasserstoffspeichers mit dem Wasserstofftank geöffnet, so dass Wasserstoff vom zweiten Wasserstoffspeicher über eine zweite Ausspeicherverbindung in Richtung des Wasserstofftanks abgeführt wird.

Zur Erreichung noch höherer Fülldrücke durch sequentielle Betankung des Wasserstofftanks über mehrere Wasserstoffspeicher weist das Verfahren bei einer bevorzugten Ausführungsform zudem die folgenden Schritte auf:
Vorsehen eines dritten Wasserstoffspeichers mit einem mit Wasserstoff befüllten dritten Wasserstoffvolumen,
Verbinden des dritten Wasserstoffspeichers mit dem Wasserstofftank, vorzugsweise im geschlossenen Zustand der ersten und zweiten Ausspeicherverbindung, so dass Wasserstoff in einer dritten Ausströmphase vom dritten Wasserstoffspeicher in den Wasserstofftank überführt wird,
Nachführen von Arbeitsfluid in den dritten Wasserstoffspeicher in einer dritten Nachverdichtungsphase, vorzugsweise durch Verbinden des dritten Wasserstoffspeichers mit dem zweiten Wasserstoffspeicher und Überführen von Arbeitsfluid vom zweiten Wasserstoffspeicher in den dritten Wasserstoffspeicher, so dass der Wasserstoff im dritten Wasserstoffspeicher durch isentrope Entspannung vor der dritten Nachverdichtungsphase und/oder während der dritten Nachverdichtungsphase abgekühlt wird und durch die isentrope Entspannung abgekühlter Wasserstoff vom dritten Wasserstoffspeicher in den Wasserstofftank überführt wird.

Die Verbindung zwischen dem dritten Wasserstoffspeicher und dem Wasserstofftank wird bevorzugt 1 bis 20, insbesondere 2 bis 10, beispielsweise im Wesentlichen vier, Minuten, nach dem Verbinden des zweiten Wasserstoffspeichers mit dem Wasserstofftank geöffnet, so dass Wasserstoff vom dritten Wasserstoffspeicher über eine dritte Ausspeicherverbindung in Richtung des Wasserstofftanks abgeführt wird.

Um eine wirksame Nachverdichtung des Wasserstoffs im jeweiligen Wasserstoffspeicher zu erreichen, wird das Arbeitsfluid bei einer bevorzugten Ausführungsform mit Hilfe einer Hochdruckpumpe, insbesondere einer Axialkolbenpumpe, einer Radialkolbenpumpe, einer Zahnradpumpe oder einer Verdrängerkolbenpumpe, insbesondere einer Plungerkolbenpumpe, vom Arbeitsfluidspeicher zum ersten Wasserstoffspeicher, vorzugsweise zudem vom ersten Wasserstoffspeicher zum zweiten Wasserstoffspeicher und/oder vom zweiten Wasserstoffspeicher zum dritten Wasserstoffspeicher und/oder vom dritten Wasserstoffspeicher zum Arbeitsfluidspeicher, gepumpt. Mit den genannten Ausführungen der Hochdruckpumpe für das Arbeitsfluid können hohe Wasserstoffdrücke von mehr als 500 bar, insbesondere mehr als 600 bar, vorzugsweise mehr als 700 bar und/oder maximal 875 bar, beispielsweise im Wesentlichen 800 bar, im jeweiligen Wasserstoffspeicher erzielt werden.

Die Pumpe wird bevorzugt mit einem Antrieb, insbesondere mit einem Antriebsmotor gekoppelt. Mit dem Antrieb wird die Antriebsleistung zur Verfügung gestellt, mit welcher die Hochdruckpumpe betrieben wird, um das Arbeitsfluid unter Druck in den ersten Wasserstoffspeicher, vorzugsweise zudem in den zweiten Wasserstoffspeicher, insbesondere zudem in den dritten Wasserstoffspeicher, zu fördern.

Bei einer besonders bevorzugten Ausführungsform wird der Antrieb mit einem Hydraulikanschluss des Fahrzeugs gekoppelt, so dass der Antrieb über den Hydraulikanschluss des Fahrzeugs betrieben wird. Somit kann die Antriebsleistung für den Antrieb vom Fahrzeug zur Verfügung gestellt werden, welches einen Hydraulikanschluss zur Bereitstellung von Hydraulikflüssigkeit vorzugsweise mit einem Druck von 50 bis 420, insbesondere von 100 bis 300 bar, beispielsweise von 150 bis 250 bar, aufweist. Solche Hydraulikanschlüsse sind beispielsweise bei Baufahrzeugen vorhanden. Vorteilhafterweise kann somit das zu betankende Fahrzeug selbst die Antriebsleistung für den Betrieb der Hochdruckpumpe bereitstellen. Dadurch kann die Betankungsanlage selbst vereinfacht bzw. verkleinert werden. Dieser Vorteil fällt insbesondere bei einer mobilen Betankungsanlage, vorzugsweise als Teil eines Tankfahrzeugs, ins Gewicht.

Zum kontinuierlichen Betrieb der Hochdruckpumpe über einen Hydraulikkreislauf ist es günstig, wenn der Antrieb über eine bidirektionale Hydraulikkupplung mit dem Hydraulikanschluss des Fahrzeugs verbunden wird, so dass dem Antrieb Hydraulikflüssigkeit unter Hochdruck zugeführt wird und Hydraulikflüssigkeit unter Niederdruck vom Antrieb in den Hydraulikanschluss des Fahrzeugs zurückgeführt wird.

Bei einer bevorzugten Ausführungsform wird der Wasserstoff im Wasserstofftank beim Betanken auf einen Fülldruck von mehr als 500 bar, insbesondere mehr als 600 bar, vorzugsweise mehr als 650 bar, vorzugsweise bis zu 875 bar, verdichtet. Alle Druckangaben dieser Offenbarung beziehen sich auf eine Umgebungstemperatur von 288,15 Kelvin.

Wie oben im Zusammenhang mit dem Verfahren zum Betanken des Wasserstofftanks geschildert, ist bei einer bevorzugten Ausführungsform der Betankungsanlage ein zweiter Wasserstoffspeicher vorgesehen, welcher über eine zweite Ausspeicherverbindung mit dem Wasserstofftank verbindbar ist. Besonders bevorzugt ist eine Ausführungsform mit einem dritten Wasserstoffspeicher, welcher über eine dritte Ausspeicherverbindung mit dem Wasserstofftank verbindbar ist. Der zweite und/oder der dritte Wasserstoffspeicher sind bevorzugt ident zum ersten Wasserstoffspeicher ausgebildet.

Der erste und/oder der zweite und/oder der dritte Wasserstoffspeicher können ein Aufnahmevolumen von 50 bis 1000 Liter (1), insbesondere von 200 bis 500 l, beispielsweise im Wesentlichen 400 l, aufweisen. Im voll befüllten Zustand können 5 bis 130 Kilogramm (kg) Wasserstoff, beispielsweise im Wesentlichen 20 kg Wasserstoff, im ersten bzw. zweiten bzw. dritten Wasserstoffspeicher gespeichert sein.

Um die oben beschriebenen Gas- und Arbeitsfluidströme zu unterschiedlichen Zeitpunkten freizugeben und sperren zu können, weist die Betankungsanlage bei einer bevorzugten Ausführungsform auf:
ein erstes Gasausgangsventil in der ersten Ausspeicherverbindung, und/oder
ein zweites Gasausgangsventil in der zweiten Ausspeicherverbindung, und/oder
ein drittes Gasausgangsventil in der dritten Ausspeicherverbindung, und/oder
ein erstes Zulaufventil in der ersten Zulaufverbindung vom Arbeitsfluidspeicher zum ersten Wasserstoffspeicher, und/oder
ein zweites Zulaufventil in der zweiten Zulaufverbindung vom Arbeitsfluidspeicher zum zweiten Wasserstoffspeicher, und/oder
ein drittes Zulaufventil in der dritten Zulaufverbindung vom Arbeitsfluidspeicher zum dritten Wasserstoffspeicher, und/oder
ein erstes Gaseingangsventil zum Befüllen des ersten Druckspeichers mit dem Wasserstoff, und/oder
ein zweites Gaseingangsventil zum Befüllen des zweiten Druckspeichers mit dem Wasserstoff, und/oder
ein drittes Gaseingangsventil zum Befüllen des dritten Druckspeichers mit dem Wasserstoff, und/oder
ein erstes Rücklaufventil in einer ersten Rücklaufleitung vom ersten Wasserstoffspeicher zum zweiten Wasserstoffspeicher zum Überführen von Arbeitsfluid vom ersten Wasserstoffspeicher in den zweiten Wasserstoffspeicher, und/oder
ein zweites Rücklaufventil in einer zweiten Rücklaufleitung vom zweiten Wasserstoffspeicher zum dritten Wasserstoffspeicher zum Überführen von Arbeitsfluid vom zweiten Wasserstoffspeicher in den dritten Wasserstoffspeicher, und/oder
ein drittes Rücklaufventil in einer dritten Rücklaufleitung vom dritten Wasserstoffspeicher zum Arbeitsfluidspeicher zum Rückführen von Arbeitsfluid vom dritten Wasserstoffspeicher in den Arbeitsfluidspeicher.

Bei einer bevorzugten Ausführungsform weist die Betankungsanlage als Hochdruckpumpe eine Axialkolbenpumpe, eine Radialkolbenpumpe, einer Zahnradpumpe oder eine Verdrängerkolbenpumpe, insbesondere eine Plungerkolbenpumpe, auf, mit welcher Arbeitsfluid vom Arbeitsfluidspeicher zum ersten Wasserstoffspeicher, vorzugsweise zudem vom ersten Wasserstoffspeicher zum zweiten Wasserstoffspeicher und/oder vom zweiten Wasserstoffspeicher zum dritten Wasserstoffspeicher und/oder vom dritten Wasserstoffspeicher zum Arbeitsfluidspeicher, gepumpt werden kann.

Bei einer bevorzugten Ausführungsform der Betankungsanlage ist die Hochdruckpumpe mit einem Antrieb gekoppelt. Der Antrieb ist bevorzugt mit einem Hydraulikanschluss des Fahrzeugs gekoppelt. Dadurch kann der Antrieb über den Hydraulikanschluss des Fahrzeugs betrieben, d.h. mit Antriebsleistung versorgt, werden. Bei einer bevorzugten Ausführungsform der Betankungsanlage ist der Antrieb über eine bidirektionale Hydraulikkupplung mit dem Hydraulikanschluss des Fahrzeugs verbunden. Dadurch kann dem Antrieb Hydraulikflüssigkeit unter Hochdruck zugeführt und Hydraulikflüssigkeit unter Niederdruck vom Antrieb in den Hydraulikanschluss des Fahrzeugs zurückgeführt werden.

Erfindungsgemäß ist zudem ein Betankungsfahrzeug mit einem Laderaum, in welchem eine mobile Betankungsanlage in einer der oben beschriebenen Ausführungsformen aufgenommen ist.

Bei einer bevorzugten Ausführungsform ist als Betankungsfahrzeug ein Wasserstofffahrzeug, insbesondere ein Brennstoffzellenfahrzeug, vorgesehen, welches einen Wasserstoff-Fahrzeugtank aufweist, mit welchem die Energie für die Fortbewegung des Betankungsfahrzeugs bereitgestellt wird. Besonders vorteilhaft ist es, wenn der Wasserstoff-Fahrzeugtank des Betankungsfahrzeugs über eine, insbesondere mit einem öffenbaren und schließbaren Ventil versehene, Fluidleitung mit dem ersten Wasserstoffspeicher, gegebenenfalls zudem mit dem zweiten und/oder dritten Wasserstoffspeicher, verbunden ist. Somit kann die Reichweite des Betankungsfahrzeugs durch Überführen von Wasserstoff vom ersten, und gegebenenfalls vom zweiten bzw. dritten, Wasserstoffspeicher in den Wasserstoff-Fahrzeugtank des Betankungsfahrzeugs gesteigert werden. Bei dieser Ausführungsform kann sich das Betankungsfahrzeug bei Bedarf selbst mit Wasserstoff versorgen. Am Einsatzort kann hingegen mit dem Betankungsfahrzeug ein anderes Fahrzeug mit Wasserstoff betankt werden.

Die Erfindung wird nachstehend anhand eines bevorzugten Ausführungsbeispiels in den Zeichnungen näher erläutert.
Fig. 1 zeigt schematisch eine mobile Betankungsanlage zur Betankung eines Wasserstofftanks eines Fahrzeuges.

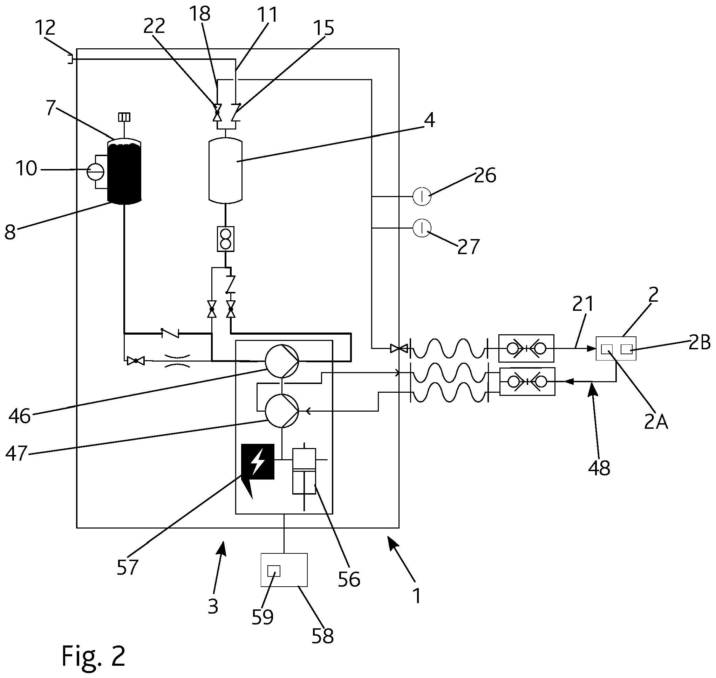

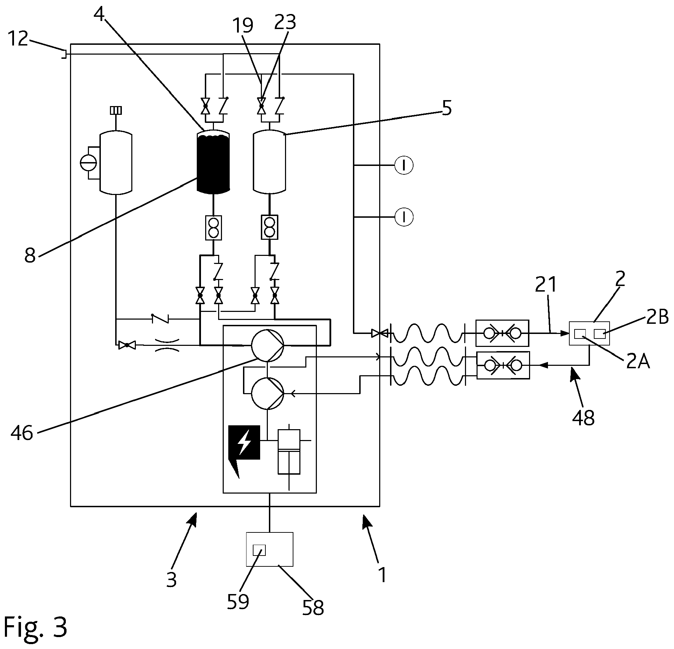

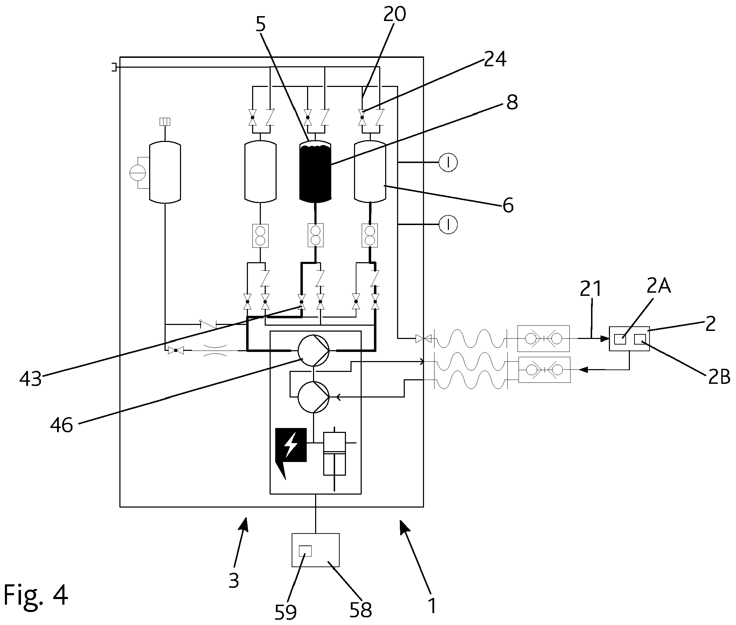

Fig. 2 bis 5 zeigen verschiedene Schritte eines Verfahrens zum Betanken des Wasserstofftanks, wobei der besseren Übersicht halber einzelne inaktive Gas- und Arbeitsfluidleitungen ausgeblendet sind.
Fig. 6 zeigt schematisch mehrere Kennlinien des Verfahrens zum Betanken des Wasserstofftanks.

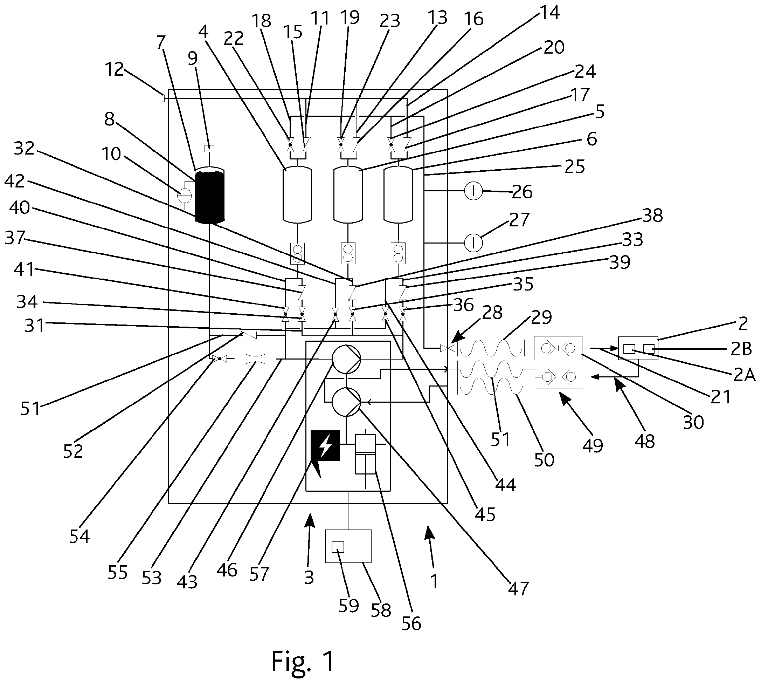

Fig. 1 zeigt schematisch eine Betankungsanlage 1 zum Betanken eines (in Fig. 1 symbolisch dargestellten) Wasserstofftanks 2A eines Fahrzeugs 2 mit Wasserstoff. Das zu betankende Fahrzeug 2 kann eine Brennstoffzelle 2B aufweisen, welche mit dem Wasserstoff vom Wasserstofftank 2A betrieben wird. In Fig. 1 ist eine mobile Ausführung der Betankungsanlage 1 gezeigt, welche im Laderaum eines (vom zu betankenden Fahrzeug 2 verschiedenen) Betankungsfahrzeugs 3 mitgeführt werden kann. Die mobile Betankungsanlage 1 weist einen ersten Wasserstoffspeicher 4, einen zweiten Wasserstoffspeicher 5 und einen dritten Wasserstoffspeicher 6 auf, welche jeweils mit Wasserstoff gefüllt sind, d.h. ein erstes, zweites bzw. drittes Wasserstoffvolumen aufweisen. Zudem weist die Betankungsanlage 1 einen Arbeitsfluidspeicher 7 auf, welcher mit einer Arbeitsflüssigkeit 8, hier Polyalphaolefin, gefüllt ist. Der erste 4, zweite 5 und dritte Wasserstoffspeicher 6 sowie der Arbeitsfluidspeicher 7 sind im Wesentlichen vertikal angeordnet (d.h. ihre Längsachsen erstrecken sich in vertikaler Richtung). Alle Orts- und Richtungsangaben dieser Offenbarung beziehen sich auf den bestimmungsgemäßen Betriebszustand der Betankungsanlage 1 im Laderaum des Tankfahrzeugs 3 auf einem horizontalen Untergrund. Der Füllstand des Arbeitsfluidspeichers 7 wird mit einem Füllstand-Messelement 9 überwacht. Mit einem Druck- und Temperatur-Messelement 10 werden Druck und Temperatur des Arbeitsfluidspeichers 7 überwacht.

Der erste Wasserstoffspeicher 4 ist über eine erste Einspeicherverbindung 11 mit einem Gaseingang 12 verbunden. Der zweite Wasserstoffspeicher 5 ist über eine zweite Einspeicherverbindung 13 mit dem Gaseingang 12 verbunden. Der dritte Wasserstoffspeicher 6 ist über eine dritte Einspeicherverbindung 14 mit dem Gaseingang 12 verbunden. Die erste Einspeicherverbindung 11 weist ein erstes Gaseingangsventil 15, die zweite Einspeicherverbindung 13 weist ein zweites Gaseingangsventil 16 und die dritte Einspeicherverbindung 14 weist ein drittes Gaseingangsventil 17 auf. Im geöffneten Zustand des ersten 15, des zweiten 16 bzw. des dritten Gaseingangsventils 17 wird am Gaseingang 12 bereitgestelltes Gas in den ersten 4, zweiten 5 bzw. dritten Wasserstoffspeicher 6 überführt, so dass Wasserstoff mit einem Nenndruck von beispielsweise im Wesentlichen 800 bar im ersten 4, zweiten 5 und dritten Wasserstoffspeicher 6 abgespeichert wird.

Der erste 4, zweite 5 bzw. dritte Wasserstoffspeicher 6 ist über eine erste 18, zweite 19 bzw. dritte Ausspeicherverbindung 20 mit einem Gasausgang 21 verbindbar, an welchem das zu betankende Fahrzeug 2 angeschlossen werden kann. In der ersten 18, zweiten 19 bzw. dritten Ausspeicherverbindung 20 ist ein erstes 22, zweites 23 und drittes Gasausgangsventil 24 angeordnet. Die erste 18, zweite 19 und dritte Ausspeicherverbindung 20 sind in einer gemeinsamen Ausgangsleitung 25 zusammengeführt, in welcher ein Temperatur-Messelement 26 zur Messung der Gastemperatur und ein Gasdruck-Messelement 27 zur Messung des Gasdrucks angeordnet sind. Die Ausgangsleitung 25 ist über eine Sicherung 28, eine Gasleitung 29 und eine Tankkupplung 30 mit dem Gasausgang 21 verbunden.

Der Arbeitsfluidspeicher 7 weist eine Versorgungsleitung 51 mit einem Versorgungs-Ventil 52 auf, welche über eine erste Zulaufverbindung 31 mit dem ersten Wasserstoffspeicher 4, über eine zweite Zulaufverbindung 32 mit dem zweiten Wasserstoffspeicher 5 und über eine dritte Zulaufverbindung 33 mit dem dritten Wasserstoffspeicher 6 verbunden ist. Die erste 31, zweite 32 und dritte Zulaufverbindung 33 münden jeweils in die Unterseite des ersten 4, zweiten 5 bzw. dritten Wasserstoffspeichers 6, so dass eine Befüllung des ersten 4, zweiten 5 bzw. dritten Wasserstoffspeichers 6 mit Arbeitsfluid 8 von unten erfolgt. In der ersten 31, zweiten 32 bzw. dritten Zulaufverbindung 33 ist jeweils ein erstes 34, zweites 35 bzw. drittes Zulaufventil 36 sowie ein erstes 37, zweites 38 bzw. drittes Zulaufrückschlagventil 39 angeordnet.

Der erste Wasserstoffspeicher 4 ist über eine erste Rücklaufleitung 40 mit einem ersten Rücklaufventil 41 mit der zweiten Zulaufverbindung 32 verbunden, mit welcher der zweite Wasserstoffspeicher 5 mit Arbeitsfluid versorgt wird. Der zweite Wasserstoffspeicher 5 ist über eine zweite Rücklaufleitung 42 mit einem zweiten Rücklaufventil 43 mit der dritten Zulaufverbindung 33 verbunden, mit welcher der dritte Wasserstoffspeicher 6 mit Arbeitsfluid versorgt wird. Der dritte Wasserstoffspeicher 6 ist über eine dritte Rücklaufleitung 44 mit einem dritten Rücklaufventil 45 mit einer Rücklaufleitung 53 verbunden, welche parallel zur Versorgungsleitung 51 verläuft. In der Rücklaufleitung 53 ist ein Rücklaufventil 54 und eine Blende 55 angeordnet. Die Rücklaufleitung 53 führt zum Arbeitsfluidspeicher 7 zurück, so dass Arbeitsfluid 8 vom dritten Wasserstoffspeicher 6 in den Arbeitsfluidspeicher 7 zurückgeführt werden kann.

In der gezeigten Ausführung weist die Betankungsanlage 1 eine (Hochdruck-)Pumpe 46 auf, welche insbesondere als Axialkolbenpumpe, Radialkolbenpumpe, Zahnradpumpe oder Plungerkolbenpumpe ausgeführt sein kann. Diese Hochdruckpumpe 46 dient dazu, das Arbeitsfluid vom Arbeitsfluidspeicher 7 zum ersten Wasserstoffspeicher 4, vom ersten Wasserstoffspeicher 4 zum zweiten Wasserstoffspeicher 5, vom zweiten Wasserstoffspeicher 5 zum dritten Wasserstoffspeicher 6 und vom dritten Wasserstoffspeicher 6 zurück zum Arbeitsfluidspeicher 7 zu pumpen. Die Hochdruckpumpe 46 ist mit einem Antrieb 47 verbunden. In der gezeigten Ausführung ist der Antrieb 47 mit einem Hydraulikanschluss 48 des Fahrzeugs 2 verbunden. Über eine bidirektionale Hydraulikkupplung 49 ist ein Vorlaufschlauch 50 mit dem Antrieb 47 verbunden. Wird Hydraulikfluid über den Antrieb 47 geführt, wandelt der Antrieb 47 den Volumenstrom in mechanische Arbeit um und treibt dadurch wiederum die Hochdruckpumpe 46 an. Der nach Arbeitsverrichtung entspannte Hydraulikstrom wird über einen Rücklaufschlauch 51 an die bidirektionale Hydraulikkupplung 49 und schließlich an den Hydraulikanschluss 48 übergeben.

Die oben beschriebenen Ventile können magnetisch, hydraulisch oder pneumatisch betätigt, d.h. insbesondere zwischen einer Offen- und einer Schließstellung, überführt werden. Besonders bevorzugt ist eine pneumatische Betätigung der Ventile. Bei dieser Ausführung kann ein Druckluftkompressor 56 vorgesehen sein, welcher die Versorgungsluft für die Schaltung der pneumatisch betätigten Ventile liefert. Eine Elektroeinheit 57 erlaubt die Speicherung und Abgabe elektrischer Energie an und aus dem Antrieb 47 und dem Druckluftkompressor 56.

Die Betankungsanlage 1 weist zudem eine (elektronische) Steuereinrichtung 58 auf, mit welcher die oben beschriebenen Ventile gesteuert, insbesondere geöffnet und geschlossen, werden können. Die Steuereinrichtung 58 weist einen (unten näher beschriebenen) Timer 59 auf.

Mit dieser Betankungsanlage 1 kann das Fahrzeug 2 wie folgt mit Druckgas, hier Wasserstoff, betankt werden. Dabei werden zumindest die folgenden Schritte durchgeführt.

In einem ersten Schritt werden der erste 4, zweite 5 und dritte Wasserstoffspeicher 6 über den Gaseingang 12 mit dem Gas gefüllt.

In einem weiteren Schritt wird das Betankungsfahrzeug 3 mit der Betankungsanlage 1 an den Einsatzort gebracht, an dem das zu betankende Fahrzeug 2, beispielsweise ein Bagger, geparkt ist.

In einem weiteren Schritt wird das Fahrzeug 2 über die Tankkupplung 30 mit der Betankungsanlage 1 verbunden.

In einem weiteren Schritt wird der Antrieb 47 über den Hydraulikanschluss 48 oder die Elektroeinheit 57 mit Energie versorgt.

In einem weiteren Schritt wird der erste Wasserstoffspeicher 4 durch Öffnen des ersten Gasausgangsventils 22 mittels der Steuereinrichtung 58 mit dem Gasausgang 21 verbunden, wodurch Wasserstoff in einer ersten Ausströmphase in den Wasserstofftank des Fahrzeuges 2 überführt wird. Durch den isentropen Anteil der Entspannung im ersten Wasserstoffspeicher 4 kühlt sich der in das Fahrzeug 2 überführte Wasserstoff ab. Mit dem Timer 59 der Steuereinrichtung 58 kann eine Wartezeit ab dem Öffnen des ersten Gasausgangsventils 22 erfasst werden, so dass eine erste Nachverdichtungsphase durch Pumpen von Arbeitsfluid 8 vom Arbeitsfluidspeicher 7 in den ersten Wasserstoffspeicher 4 mittels der Hochdruckpumpe 46 erst nach Beginn der ersten Ausströmphase beginnt. Je nach Ausführung können die erste Nachverdichtungs- und die erste Ausströmphase in einer Zeitdauer ausgewählt aus einem Bereich von 5 Sekunden bis 4 Minuten miteinander zeitlich überlappen.

Vor dem Erreichen eines Druckausgleichs zwischen dem ersten Wasserstoffspeicher 4 und dem Fahrzeug 2 am Gasausgang 21 werden die Ventile mit der Steuereinrichtung 58 derart geschalten, dass die erste Ausspeicherverbindung 18 abgesperrt wird. Über die Hochdruckpumpe 46 aus dem Arbeitsfluidspeicher 7 kann noch eine gewisse Zeit (insbesondere bis zum Beginn der zweiten Ausströmphase, siehe unten) Arbeitsfluid 8 in den ersten Wasserstoffspeicher 4 nachgeführt werden.

In einem weiteren Schritt wird der zweite Wasserstoffspeicher 5 durch Öffnen des zweiten Gasausgangsventils 23 mittels der Steuereinrichtung 58 mit dem Gasausgang 21 verbunden, so dass eine zweite Ausströmphase beginnt. Mit dem Timer 59 der Steuereinrichtung 58 kann eine zweite Wartezeit ab dem Öffnen des zweiten Gasausgangsventils 23 eingehalten werden, so dass eine zweite Nachverdichtungsphase durch Pumpen von Arbeitsfluid 8 in den zweiten Wasserstoffspeicher 5 mittels der Hochdruckpumpe 46 erst nach Beginn der zweiten Ausströmphase beginnt. Je nach Ausführung können die zweite Nachverdichtungs- und die zweite Ausströmphase in einer Zeitdauer ausgewählt aus einem Bereich von 5 Sekunden bis 4 Minuten miteinander zeitlich überlappen.

Vor dem Erreichen des Druckausgleichs zwischen dem zweiten Wasserstoffspeicher 5 und dem Fahrzeug 2 am Gasausgang 21 werden die Ventile mittels der Steuereinrichtung 58 derart geschalten, dass die zweite Ausspeicherverbindung 19 abgesperrt wird. Über die Hochdruckpumpe 46 kann noch eine gewisse Zeit (insbesondere bis zum Beginn der dritten Ausströmphase, siehe unten) aus dem ersten Wasserstoffspeicher 4 Arbeitsfluid 8 in den zweiten Wasserstoffspeicher 5 nachgeführt werden.

In einem weiteren Schritt wird der dritte Wasserstoffspeicher 6 durch Öffnen des dritten Gasausgangsventils 24 mittels der Steuereinrichtung 58 mit dem Gasausgang 21 verbunden, so dass eine dritte Ausströmphase beginnt. Mit dem Timer 59 der Steuereinrichtung 58 kann eine dritte Wartezeit ab dem Öffnen des dritten Gasausgangsventils 24 eingehalten werden, so dass eine dritte Nachverdichtungsphase durch Pumpen von Arbeitsfluid 8 in den dritten Wasserstoffspeicher 6 mittels der Hochdruckpumpe 46 erst nach Beginn der dritten Ausströmphase beginnt. Je nach Ausführung können die dritte Nachverdichtungs- und die dritte Ausströmphase in einer Zeitdauer ausgewählt aus einem Bereich von 5 Sekunden bis 4 Minuten miteinander zeitlich überlappen.

Vor dem Erreichen des Druckausgleichs zwischen dem dritten Wasserstoffspeicher 6 und dem Fahrzeug 2 am Gasausgang 21 werden die Ventile mittels der Steuereinrichtung 58 derart geschalten, dass die dritte Ausspeicherverbindung 20 geschlossen wird.

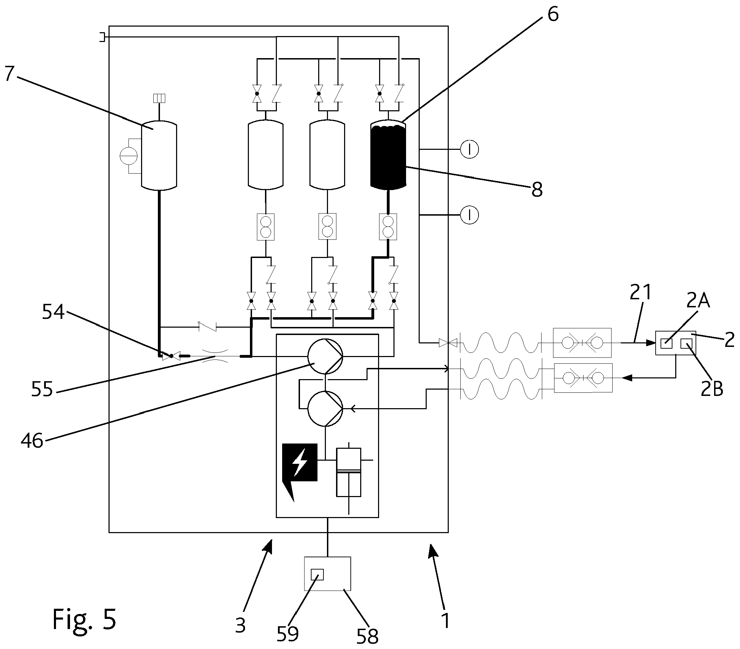

In einem weiteren Schritt, vgl. Fig. 5, können die Ventile mittels der Steuereinrichtung 58 so geschalten werden, dass Arbeitsfluid 8 vom dritten Wasserstoffspeicher 6 in den Arbeitsfluidspeicher 7 zurückgeführt wird.

Schließlich kann durch Nachführen von Arbeitsfluid 8 der Nenn- bzw. Initialdruck im ersten 4 und/oder zweiten 5 und/oder dritten Wasserstoffspeicher 6 wieder hergestellt werden.

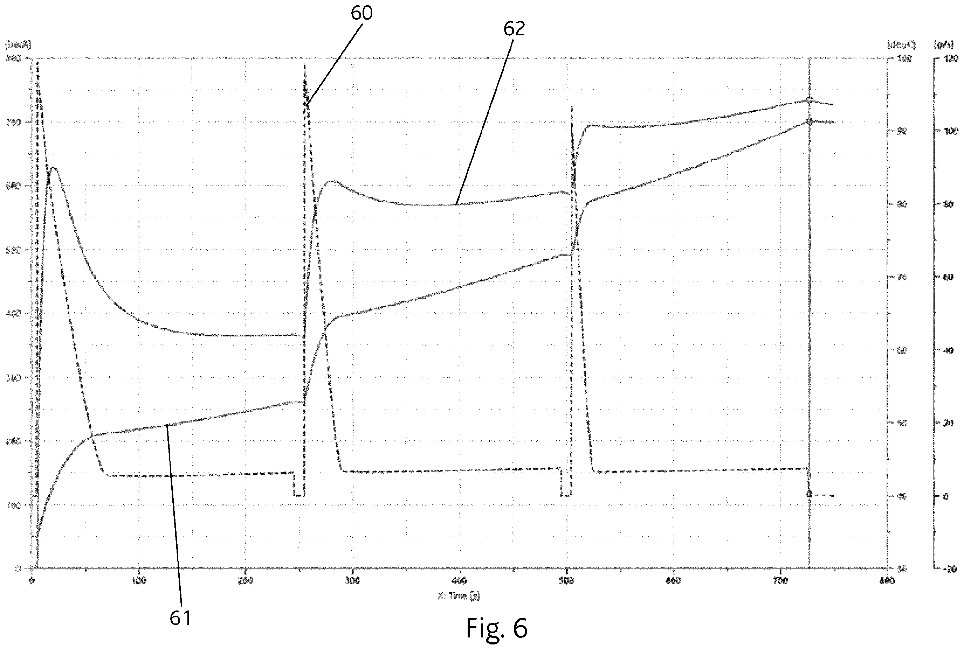

Fig. 6 zeigt ein Diagramm mit mehreren Kennlinien, in denen der Effekt des oben beschriebenen Verfahrens symbolisch veranschaulicht wird. Eine erste Kennlinie 60 zeigt den Massenstrom des Wasserstoffs in g/s. Eine zweite Kennlinie 61 zeigt den Fülldruck des Wasserstofftanks 2A in barA. Eine dritte Kennlinie 62 zeigt die Temperatur des Wasserstofftanks 2A in °C. Zu Beginn der ersten Ausströmphase steigt die Temperatur im Wasserstofftank 2A schnell an, bis die Temperatur ein erstes (lokales) Maximum erreicht. Dann kommt der Abkühleffekt durch die isentrope Entspannung des Wasserstoffs zu tragen, welcher in der ersten Ausströmphase wegen der hohen Druckdifferenz zwischen dem Inertialdruck des ersten Wasserstoffspeichers 6 und dem niedrigen Anfangsdruck des Wasserstofftanks 2A besonders ausgeprägt ist. In der zweiten Ausströmphase und in der dritten Ausströmphase treten deutlich geringere Abkühlungen durch die isentrope Entspannung des Wasserstoffs ein. Wesentlich ist, dass die Temperatur im Wasserstofftank 2A während des Betankungsvorgangs nicht (quasi) kontinuierlich steigt, sondern zeitweise eine Abkühlung durch die isentrope Entspannung des Wasserstoffs eintritt, welche dazu beiträgt, dass die vorgegebene Maximaltemperatur des Wasserstoffs im Wasserstofftank 2A von beispielsweise 110°C eingehalten wird.

### Bezugsziffern:

1 Betankungsanlage
2 Fahrzeug
2A Wasserstofftank
2B Brennstoffzelle
3 Tankfahrzeug
4 erster Wasserstoffspeicher
5 zweiter Wasserstoffspeicher
6 dritter Wasserstoffspeicher
7 Arbeitsfluidspeicher
8 Arbeitsfluid
9 Füllstand-Messelement
10 Temperatur-Messelement
11 erste Einspeicherverbindung
12 Gaseingang
13 zweite Einspeicherverbindung
14 dritte Einspeicherverbindung
15 erstes Gaseingangsventil
16 zweites Gaseingangsventil
17 drittes Gaseingangsventils
18 erste Ausspeicherverbindung
19 zweite Ausspeicherverbindung
20 dritte Ausspeicherverbindung
21 Gasausgang
22 erstes Gasausgangsventil
23 zweites Gasausgangsventil
24 drittes Gasausgangsventil
25 gemeinsame Ausgangsleitung
26 Temperatur-Messelement
27 Gasdruck-Messelement
28 Abreißsicherung
29 Gasleitung
30 Tankkupplung
31 erste Zulaufverbindung
32 zweite Zulaufverbindung
33 dritte Zulaufverbindung
34 erstes Zulaufventil
35 zweites Zulaufventil
36 drittes Zulaufventil
37 erstes Zulaufrückschlagventil
38 zweites Zulaufrückschlagventil
39 drittes Zulaufrückschlagventil
40 erste Rücklaufleitung
41 erstes Rücklaufventil
42 zweite Rücklaufleitung
43 zweites Rücklaufventil
44 dritte Rücklaufleitung
45 drittes Rücklaufventil
46 Hochdruckpumpe
47 Antrieb
48 Hydraulikanschluss
49 Hydraulikkupplung
50 Vorlaufschlauch
51 Versorgungsleitung
52 Versorgungs-Ventil
53 Rücklaufleitung
54 Rücklaufventil
55 Blende
56 Druckluftkompressor
57 Elektroeinheit
58 elektronische Steuereinrichtung
59 Timer

## Patentansprüche

1. Verfahren zum Betanken eines Wasserstofftanks (2A), insbesondere eines Fahrzeuges (2), mit Wasserstoff, mit den Schritten:
Vorsehen eines ersten Wasserstoffspeichers (4) mit einem mit Wasserstoff befüllten Wasserstoffvolumen,
Vorsehen eines Arbeitsfluidspeichers (7) mit einem Arbeitsfluid,
Verbinden des ersten Wasserstoffspeichers (4) mit dem Wasserstofftank (4), so dass Wasserstoff in einer Ausströmphase vom ersten Wasserstoffspeicher (4) in den Wasserstofftank (2A) überführt wird, und
Verbinden des Arbeitsfluidspeichers (7) mit dem ersten Wasserstoffspeicher (4), so dass Arbeitsfluid (8) in einer mit der Ausströmphase überlappenden Nachverdichtungsphase vom Arbeitsfluidspeicher (7) in den ersten Wasserstoffspeicher (4) gepumpt wird, wodurch das mit Wasserstoff befüllte Wasserstoffvolumen in dem ersten Wasserstoffspeicher (4) reduziert wird,
**gekennzeichnet durch**
Abkühlen des Wasserstoffs im ersten Wasserstoffspeicher (4) durch isentrope Entspannung vor der Nachverdichtungsphase und/oder während der Nachverdichtungsphase, so dass durch die isentrope Entspannung abgekühlter Wasserstoff vom ersten Wasserstoffspeicher (4) in den Wasserstofftank (2A) überführt wird.

2. Verfahren nach Anspruch 1, **dadurch gekennzeichnet, dass** vom Verbinden des ersten Wasserstoffspeichers (4) mit dem Wasserstofftank (2A) bis zum Verbinden des Arbeitsfluidspeichers (7) mit dem ersten Wasserstoffspeicher (4) eine Wartezeit von mindestens 30 Sekunden, vorzugsweise mindestens 60 Sekunden, insbesondere mindestens 2 Minuten, beispielsweise mindestens 3 Minuten, eingehalten wird.

3. Verfahren nach Anspruch 1 oder 2, **dadurch gekennzeichnet, dass** das Arbeitsfluid im ersten Wasserstoffspeicher (4) im direkten Kontakt mit dem Gas steht.

4. Verfahren nach Anspruch 3, **dadurch gekennzeichnet, dass** als Arbeitsfluid ein Polyalphaolefin verwendet wird.

5. Verfahren nach einem der Ansprüche 1 bis 4, **dadurch gekennzeichnet, dass** der Wasserstoff im ersten Wasserstoffspeicher (4) vor dem Verbinden mit dem Wasserstofftank (2A) bei einem Nenndruck von mehr als 500 bar, vorzugsweise mehr als 600 bar, insbesondere mehr als 700 bar und/oder weniger als 875 bar, beispielsweise im Wesentlichen 800 bar, vorliegt.

6. Verfahren nach einem der Ansprüche 1 bis 5, **gekennzeichnet durch**:
Vorsehen eines zweiten Wasserstoffspeichers (5) mit einem mit Wasserstoff befüllten Wasserstoffvolumen,
Verbinden des zweiten Wasserstoffspeichers (5) mit dem Wasserstofftank, so dass Wasserstoff in einer zweiten Ausströmphase vom zweiten Wasserstoffspeicher (5) in den Wasserstofftank (2A) überführt wird,
Nachführen von Arbeitsfluid in den zweiten Wasserstoffspeicher (5) in einer mit der zweiten Ausströmphase zeitlich überlappenden zweiten Nachverdichtungsphase, vorzugsweise durch Verbinden des zweiten Wasserstoffspeichers (5) mit dem ersten Wasserstoffspeicher (4), so dass der Wasserstoff im zweiten Wasserstoffspeicher (5) durch isentrope Entspannung vor der zweiten Nachverdichtungsphase und/oder während der zweiten Nachverdichtungsphase abgekühlt wird und durch die isentrope Entspannung abgekühlter Wasserstoff vom zweiten Wasserstoffspeicher (5) in den Wasserstofftank (2A) überführt wird.

7. Verfahren nach Anspruch 6, **gekennzeichnet durch**:
Vorsehen eines dritten Wasserstoffspeichers (6) mit einem mit Wasserstoff befüllten Wasserstoffvolumen,
Verbinden des dritten Wasserstoffspeichers (6) mit dem Wasserstofftank (2A), so dass Wasserstoff in einer dritten Ausströmphase vom dritten Wasserstoffspeicher (6) in den Wasserstofftank (2A) überführt wird,
Nachführen von Arbeitsfluid in den dritten Wasserstoffspeicher (6) in einer mit der dritten Ausströmphase zeitlich überlappenden dritten Nachverdichtungsphase, vorzugsweise durch Verbinden des dritten Wasserstoffspeichers (6) mit dem zweiten Wasserstoffspeicher, so dass der Wasserstoff im dritten Wasserstoffspeicher (6) durch isentrope Entspannung vor der dritten Nachverdichtungsphase und/oder während der dritten Nachverdichtungsphase abgekühlt wird und durch die isentrope Entspannung abgekühlter Wasserstoff vom dritten Wasserstoffspeicher (6) in den Wasserstofftank (2A) überführt wird.

8. Verfahren nach einem der Ansprüche 1 bis 7, **dadurch gekennzeichnet, dass** das Arbeitsfluid (8) mit Hilfe einer Hochdruckpumpe (46), insbesondere einer Axialkolbenpumpe, einer Radialkolbenpumpe, einer Zahnradpumpe oder einer Verdrängerkolbenpumpe, insbesondere einer Plungerkolbenpumpe, vom Arbeitsfluidspeicher (7) zum ersten Wasserstoffspeicher (4), vorzugsweise zudem vom ersten Wasserstoffspeicher (4) zum zweiten Wasserstoffspeicher (5) und/oder vom zweiten Wasserstoffspeicher (5) zum dritten Wasserstoffspeicher (6) und/oder vom dritten Wasserstoffspeicher (6) zum Arbeitsfluidspeicher (7), gepumpt wird.

9. Verfahren nach Anspruch 8, **dadurch gekennzeichnet, dass** die Hochdruckpumpe (46) mit einem Antrieb (47) gekoppelt wird.

10. Verfahren nach Anspruch 9, **dadurch gekennzeichnet, dass** der Antrieb (47) mit einem Hydraulikanschluss (48) des Fahrzeugs (2) gekoppelt wird, so dass der Antrieb (47) über den Hydraulikanschluss (48) des Fahrzeugs (2) betrieben wird.

11. Verfahren nach Anspruch 10, **dadurch gekennzeichnet, dass** der Antrieb (47) über eine bidirektionale Hydraulikkupplung (49) mit dem Hydraulikanschluss (48) des Fahrzeugs (2) verbunden wird, so dass dem Antrieb (47) Hydraulikflüssigkeit unter Hochdruck zugeführt wird und Hydraulikflüssigkeit unter Niederdruck vom Antrieb (47) in den Hydraulikanschluss (48) des Fahrzeugs (2) zurückgeführt wird.

12. Betankungsanlage (1), insbesondere mobile Betankungsanlage, zum Betanken eines Wasserstofftanks (2A), insbesondere eines Fahrzeuges (2), mit Wasserstoff, aufweisend:
einen ersten Wasserstoffspeicher (4), welcher den Wasserstoff enthält,
einen Arbeitsfluidspeicher (7), welcher ein Arbeitsfluid (8) enthält,
eine Steuereinrichtung (58), insbesondere mit einer Ventilsteuerung, zur Steuerung einer ersten Ausspeicherverbindung (18) zum Ausspeichern von Wasserstoff vom ersten Wasserstoffspeicher (4) zum Wasserstofftank (2A) und zur Steuerung einer ersten Zulaufverbindung (31) zwischen dem Arbeitsfluidspeicher (7) und dem ersten Wasserstoffspeicher (4),
eine Pumpe (46), mit welcher Arbeitsfluid vom Arbeitsfluidspeicher (7) zum ersten Wasserstoffspeicher (4) gepumpt werden kann,
**dadurch gekennzeichnet, dass**
die Steuereinrichtung (58) dazu eingerichtet ist, die erste Zulaufverbindung (31) und/oder die Pumpe (46) derart zu steuern, dass Wasserstoff im ersten Wasserstoffspeicher (4) durch isentrope Entspannung gekühlt und durch die isentrope Entspannung abgekühlter Wasserstoff vom ersten Wasserstoffspeicher (4) über die erste Ausspeicherverbindung (18) in den Wasserstofftank (2A) abgeführt wird.

13. Betankungsanlage (1) nach Anspruch 12, **gekennzeichnet durch**:
einen zweiten Wasserstoffspeicher (5), welcher über eine zweite Ausspeicherverbindung (19) mit dem Wasserstofftank (2A) verbindbar ist,
vorzugsweise einen dritten Wasserstoffspeicher (6), welcher über eine dritte Ausspeicherverbindung (20) mit dem Wasserstofftank (2A) verbindbar ist.

14. Betankungsanlage (1) nach Anspruch 12 oder 13, **gekennzeichnet durch**
ein erstes Gasausgangsventil (22) in der ersten Ausspeicherverbindung (18), und/oder
ein zweites Gasausgangsventil (23) in der zweiten Ausspeicherverbindung (19), und/oder
ein drittes Gasausgangsventil (24) in der dritten Ausspeicherverbindung (20), und/oder
ein erstes Zulaufventil (34) in der ersten Zulaufverbindung (2) vom Arbeitsfluidspeicher (7) zum ersten Wasserstoffspeicher (4), und/oder
ein zweites Zulaufventil (35) in der zweiten Zulaufverbindung (32) vom Arbeitsfluidspeicher (7) zum zweiten Wasserstoffspeicher, (5) und/oder
ein drittes Zulaufventil (36) in der dritten Zulaufverbindung (33) vom Arbeitsfluidspeicher (7) zum dritten Wasserstoffspeicher, und/oder
ein erstes Gaseingangsventil (15) zum Befüllen des ersten Druckspeichers (4) mit dem Wasserstoff, und/oder
ein zweites Gaseingangsventil (16) zum Befüllen des zweiten Druckspeichers (5) mit dem Wasserstoff, und/oder
ein drittes Gaseingangsventil (17) zum Befüllen des dritten Druckspeichers (6) mit dem Wasserstoff, und/oder
ein erstes Rücklaufventil (41) in einer ersten Rücklaufleitung (40) vom ersten Wasserstoffspeicher (4) zum zweiten Wasserstoffspeicher (5) zum Überführen von Arbeitsfluid (8) vom ersten Wasserstoffspeicher (4) in den zweiten Wasserstoffspeicher (5), und/oder
ein zweites Rücklaufventil (43) in einer zweiten Rücklaufleitung (42) vom zweiten Wasserstoffspeicher (5) zum dritten Wasserstoffspeicher (6) zum Überführen von Arbeitsfluid (8) vom zweiten Wasserstoffspeicher (5) in den dritten Wasserstoffspeicher (6), und/oder
ein drittes Rücklaufventil (45) in einer dritten Rücklaufleitung (44) vom dritten Wasserstoffspeicher (6) zum Arbeitsfluidspeicher (7) zum Rückführen von Arbeitsfluid (8) vom dritten Wasserstoffspeicher (6) in den Arbeitsfluidspeicher (7).

15. Betankungsfahrzeug (3) mit einem Laderaum, in welchem die mobile Betankungsanlage (1) nach Anspruch 13 oder 14 aufgenommen ist, wobei das Betankungsfahrzeug (3) bevorzugt einen Fahrzeugtank aufweist, welcher über eine Fluidleitung mit dem ersten Wasserstoffspeicher (4), vorzugsweise zudem über zumindest eine weitere Fluidleitung mit dem zweiten Wasserstoffspeicher (5) und/oder dem dritten Wasserstoffspeicher (6), verbunden ist.
